(19) Europäisches Patentamt
European Patent Office
Office européen des brevets

(11) Publication number: **0 186 370**
**A2**

(12) **EUROPEAN PATENT APPLICATION**

(21) Application number: 85308962.1

(22) Date of filing: 10.12.85

(51) Int. Cl.[4]: C 22 B 34/12
C 09 C 1/36

(30) Priority: 10.12.84 NZ 210508

(43) Date of publication of application: 02.07.86 Bulletin 86/27

(84) Designated Contracting States: AT BE CH DE FR GB IT LI LU NL SE

(71) Applicant: GRAMPIAN MINING COMPANY LIMITED
Fletcher Challenge House 87-91 The Terrace
Wellington(NZ)

(72) Inventor: Judd, Barry Thomas
30 Collingwood Street
Lower Hutt(NZ)

(74) Representative: Allard, Susan Joyce et al,
BOULT, WADE & TENNANT 27 Furnival street
London EC4A 1PQ(GB)

# (54) Titanium dioxide pigment production from ilmenite.

(57) A process for producing titanium dioxide of a pigment grade from ilmenite in which ilmenite is optionally leashed with dilute hydrochloric acid to effect at least a substantial removal of the phosphorus content therefrom reacting the resulting ilmenite when in a particulate form with an excess of hydrochloric acid at an acid concentration greater than 25% w/w to generate titanium ions in solution, hydroysing the titanium ions in the presence of seed nuclei and precipitating titanium hydrate from the liquor, and calcinating the titanium hydrate to produce titanium dioxide of a pigment grade. The hydrolysis involved is preferably thermal hydrolysis involving substantially continuous addition of the titanium solution to the hydroysing mixture.

EP 0 186 370 A2

Croydon Printing Company Ltd

0186370

TITANIUM DIOXIDE PIGMENT PRODUCTION FROM ILMENITE

The present invention relates to improvements in and/or relating to processes for producing titanium dioxide of a pigment grade, parts of such processes and the products of such a process.

Ilmenite is a source of both iron and titanium and while it is convenient to speak of ilmenite as having the formula $FeTiO_3$ it should be realised that the iron can be present in both the ferrous and ferric oxidation states. In this respect reference should be made to the paper given by H.N. Sinha at the conference held in Bombay in 1979 in respect of advanced chemical metallurgy where in Table 1 the different types of ilmenite are analysed, the results by convention being expressed in the terms of $TiO_2$, FeO and $Fe_2O_3$. In New Zealand there are various kinds of ilmenite but for the purpose of comparison with those listed in Table 1 previously referred to a West Coast, South Island Barrytown ilmenite has the following make up expressed in the stable oxides:-

| | |
|---|---|
| $TiO_2$ | 46.5% |
| FeO | 38.4% |
| $Fe_2O_3$ | 4.6% |

This is typical of all West Coast South Island ilmenites which are frequently referred to as iron sands. Ilmenites with such high ferrous values are usually associated in massive rock deposits as found in Norway and USA.

It can be seen that this New Zealand ilmenite differs to some extent from those available at least in Australia in that the New Zealand ilmenite has a much larger proportion of the iron present in the ferrous state.

West Coast ilmenite contains about 0.24% $P_2O_5$ which is associated with the mineral apatite. This mineral is associated with the ilmenite grains and cannot be separated from the ilmenite by the conventional techniques used for ilmenite recovery.

In New Zealand Patent Specification No. 157303 there is disclosed

and claimed a process for the recovery of titanium dioxide from ilmenite, which process has as a first step the digestion of ilmenite with a dilute mineral acid such as sulphuric acid or hydrochloric acid at a temperature and for a time sufficient to effect the solution of substantially all the iron and titanium in the ilmenite, as a second step the removal of the gangue material, recovery of the dissolved titanium being subsequently achieved by hydrolysis the form in soluble titanium hydrate. Conversion of the thus obtained hydrate to titanium dioxide is disclosed. Titanium dioxide pigment is not recovered by this process.

In United States Patent Specification 3,549,322 there is disclosed a process for the manufacture of acicular and star-shaped rutile pigments from hydrochloric acid - titanium chloride solutions in which the hydrochloric acid - titanium chloride solution is hydrolysed in the presence of a titanium nuclei and in a particular manner; and the titanium hydrate formed is calcined in the presence of growth-retarding compounds to form acicular and star-shaped rutile pigments.

Notwithstanding the disclosures in the foregoing specifications no comprehensive process suitable for use with ilmenites such as those located in the West Coast of the South Island has been disclosed which of itself will provide titanium dioxide of a pigment grade.

Accordingly in one aspect the present invention may broadly be said to consist in a process for producing titanium dioxide of a pigment grade from ilmenite comprising the steps of

(1) reacting in solution at an elevated temperature the ilmenite when in a particulate form with an excess of hydrochloric acid at an acid concentration greater than 25% w/w to generate titanium ions in solution,

(2) removing solids from the resulting liquor,

(3) optionally precipitating ferrous chloride from the liquor,

(4) hydrolysing the titanium ions in the presence of seed nuclei and precipitating titanium hydrate from the liquor,

(5) separating the resulting solution from the precipitated titanium hydrate,

(6) optionally regenerating hydrochloric acid at a strength greater than 25% w/w from the resulting solution of step 5, optionally using ferrous chloride from optional step 3, and returning such acid for use in step 1, and

(7) calcinating titanium hydrate obtained from step 5, optionally in the presence of additives, to produce titanium dioxide of a pigment grade.

Preferably ilmenite before going to step 1 has been preleached with a dilute mineral acid (eg. hydrochloric nitirc) to remove some of the phosphorous content thereof.

Accordingly in another aspect the present invention may broadly be said to consist in a process for producing titanium dioxide of a pigment grade from ilmenite having a phosphorous content comprising the steps of

(A) leaching the ilmenite with dilute hydrochloric acid to effect at least a substantial removal of the phosphorus content therefrom, and

(B)(1) reacting in solution at an elevated temperature the resulting ilmenite when in a particulate form with an excess of hydrochloric acid at an acid concentration greater than 25% w/w to generate titanium ions in solution,

(2) removing solids from the resulting liquor,

(3) optionally precipitating ferrous chloride from the liquor,

(4) hydrolysing the titanium ions in the presence of seed nuclei and precipitating titanium hydrate from the liquor,

(5) separating the resulting solution from the precipitated titanium hydrate,

(6) optionally regenerating hydrochloric acid at a strength greater than 25% w/w from the resulting solution of step 5, optionally using ferrous chloride from optional step 3, and returning such acid for use in step 1, and

(7) calcinating titanium hydrate obtained from step 5, optionally in the presence of additives, to produce titanium dioxide of a pigment grade.

The titanium ions in solution are in the (IV) state e.g. titanic or titanyl.

Preferably the hydrolysis step involves the substantially continuous addition of the liquor containing titanium ions to a hydrolysing mixture including suspended seed nucleii.

Preferably the addition takes about 2 hours.

Preferably the seed nucleii represent 1.5% to 2.0% W/W of the titanium precipitated during the course of the reaction.

Preferably the ilmenite is a West Coast South Island ilmenite.

Preferably a quantity of iron sufficient to covert most, if not all, of the ferric iron content to a ferrous state is added to the reaction mix of step 1 or the liquor thereof.

Preferably the acid strength for step (1) is greater than 30% w/w. The most preferred acid strength is about 35% w/w.

Preferably the particulate ilmenite has been ground.

Preferably the ilmenite size is such that 95% of the particles are below 74 microns.

Preferably the excess of acid to ilmenite is such that there is an acid/ilmenite ratio of 1.5 to 1 when expressed as the weight ratio of 100% acid to ilmenite.

Preferably the elevated temperature is 95°C maximum.

Preferably the reaction of the ilmenite with the hydrochloric acid is at 95°C maximum reducing to 80°C within the first hour, then declining to 70°C over the next three hours.

Preferably the reaction time for step 1 is about 4 hours.

Preferably step 2 is carried out by conventional solid separation techniques.

Preferably the gangue is washed to recover soluble components.

Preferably optional step 3 when carried out provides ferrous chloride which is used in the regeneration of at least some of the hydrochloric acid to be returned for use in step 1.

Preferably optional step 3 is carried out substantially as hereinafter described.

Preferably step 4 includes thermal hydrolysis to convert the soluble titanic ions to insoluble titanium hydrate.

Preferably the amount of seed nuclei used represents approximately 1.5% - 2% w/w of the titanium precipitated from solution during the course of the reaction.

Preferably throughout the hydrolysis procedure the seed suspension or the hydrolysing mixture is stirred and maintained at boiling.

Preferably the seed preparation is carried out substantially as hereinafter described.

Preferably step 5 is carried out substantially as hereinafter described.

Step 5 includes washing the titanium hydrate.

Preferably said washing is carried out with a weak aqueous solution of hydrochloric acid e.g. about 3% w/w.

Preferably the calcination is carried out substantially as hereinafter described.

Preferably the regeneration of step 6 is carried out using any one of the three specifically disclosed regenerative processes hereinafter described or modifications thereof.

Preferably the regeneration is carried out substantially as hereinafter described generally with reference to Figure 4 of the accompanying drawings.

In the process for producing titanium dioxide pigment, the phosphorus in the ilmenite dissolves in the digestion stage and then precipitates with the titanium hydrate during hydrolysis. It thus appears in the product after calcination. Theoretically a phosphate content of 0.52% $P_2O_5$ will be found in pigment when the West Coast South Island of New Zealand ilmenite is used. In practice somewhat higher levels will be found due to the quantitative dissolution and precipitation of phosphorus compared to the slightly less than quantitative dissolution and precipitation of titanium.

Phosphorus affects the calcination of titanium hydrate for pigment production. It is well known that phosphorus inhibits the formation of the rutile crystal structure, the most common crystal form of commercial pigments. To overcome this inhibition, increased calcination temperatures may be employed but this alternative is detrimental to other pigment properties such as colour and hiding power.

It has been found that a pre-leach of the unground ilmenite using cold, dilute hydrochloric acid (concentrations between 10-40 g/l have been found suitable) will dissolve approximately three-quarters of the phosphate from the ilmenite. If the ilmenite is finely ground essentially quantitative removal of phosphate is achieved. Under the preferred conditions of temperature and acid concentration used no real loss of titanium occurs. After this treatment the ilmenite is filtered, washed, and dried prior to feeding the pigment plant.

'Pre-leaching' unground ilmenite fits more easily into the process scheme and is the preferred option. The New Zealand ilmenite so treated has a phosphate content of approximately 0.06 by weight $P_2O_5$ which gives a product containing about 0.14% by weight $P_2O_5$.

In a further aspect the invention consists in a process for preparing ilmenite with a phosphorus content for titanium dioxide pigment recovery comprising leaching the ilmenite with dilute mineral acid eg hydrochloric acid at low or ambient temperatures prior to digestion of the titanium values.

Preferably the hydrochloric acid is at ambient temperature.

Preferably the hydrochloric acid is at a concentration of from 10 to 50 g/l.

Preferably the process includes filtering, washing and/or drying the leached ilmenite.

Preferably the ilmenite is leached after or during grinding to a particulate form.

The invention also consists in an acid regeneration process substantially as in any one of Figures 2 to 4 when forming part of a process for producing titanium dioxide pigment in accordance with the present invention.

Prefered forms of the present invention will now be described with reference to the accompanying drawings in which

Figure 1 is a flow diagram of the preferred titanium pigment process showing the inclusion of the optional $FeCl_2$ crystallisation

stage, the flow diagram showing in a general sense the acid regeneration to be carried out,

Figure 2 is a flow diagram of the acid regeneration process where the total flow is regenerated,

Figure 3 is a flow diagram where the ferrous chloride crystallization is carried out by cooling, and

Figure 4 is a f low diagram where there is ferrous chloride crystalisation.

## Ilmenite Digestion

Ilmenite is reacted with hydrochloride to produce a solution of titanium for further processing. The reaction may be represented by the following equation:-

$$FeTiO_3 + 6\ HCl \qquad FeCl_2 + TiCl_4 + H_2O$$

although the solution titanium species is probably present as an oxychloride rather than the tetrachloride.

As can be seen, the ferrous, iron content of the ilmenite is also taken into solutin during reaction. Similarly most other elements, present as impurities in the ilmenites, are dissolved including a small amount of ferric iron. This last component has a detrimental effect on the quality of the titanium dioxide pigment ultimately produced. A quantity of scrap metallic iron is therefore added during the digestion process to reduce ferric iron to the ferrous state and also to reduce a small portion of the titanium in solution to the, so called, titanous state.

The relevant reactions may be represented as follows:-

$$2\ Fe^{3+} + Fe \qquad 3\ Fe^{2+}$$

$$2\ Ti^{4+} + Fe \qquad 2\ Ti^{3+} + Fe2+$$

The need to reduce ferric iron in solution is well known and practised in the sulphate process for pigment manufacture.

The preferred operating parameters are:

Acid strength - 35% w/w; higher strengths are probably beneficial

but may be difficult to produce in the regeneration plant. Significant reaction can be achieved with 30% w/w acid but not with 25% w/w

Ilmenite size - 95% below 74 microns; finer ilmenite is beneficial. Coarser ilmenite may be used with some reduction in titanium dissolution.

Acid Ilmenite Ratio - 1.5/1 expressed as the weight ratio of 100% acid to ilmenite. Lower ratios lead to a reduction in titanium dissolution. Higher ratios may give increased reaction rates but probably adversely affect subsequent processing.

Temperature - 95°C maximum reducing to 80°C within the first hour then declining to 70°C over the next three hours. Higher temperatures may lead to precipitation of dissolved titanium whereas lower temperatures give slower reaction rates.

Reaction Time - 4 hours; Longer times give slightly increased dissolution of titanium whereas shorter times give lower titanium dissolution.

Metallic Iron - Sufficient to achieve about 5 g/l reduced titanium in solution.

Reaction Efficiency - 90% of the titanium is dissolved.

The above conditions apply to the reaction of Westland ilmenite with hydrochloric acid. Other ilmenites or titanium bearing feed materials may exist that can be used for this purpose. The preferred conditions for these materials may differ from those given and must be determined in each particular case. Indeed reaction efficiencies anywhere in a range of 85% to 90% may be acceptable.

## Gangue Separation

After ilmenite digestion is complete the reaction mixture will contain some unreacted ilmenite and also those components of ilmenite not soluble in the acid, principally quartz and silicate minerals. These solid particles must be removed otherwise they will contaminate the ultimate products.

Conventional solids separation techniques, such as thickeners and filters, can be employed for this duty. Proprietary synthetic, or other, flocculants can be used beneficially to aid solids separation. The gangue will be washed to recover soluble components.

## Ferrous Chloride Crystallization

Ferrous chloride ($FeCl_2.4H_2O$) may be crystallised and removed from the liquor produced by reacting ilmenite and acid before hydrolysis is done. This step will reduce the iron concentration in solution and may assist in achieving low iron content in the final product by the hydrate washing operations. This optional stage is therefore included for reasons of product quality e.g. improved product whiteness.

In acid regeneration two of the process flowsheets, Figures 3 and 4, show ferrous chloride crystallisation also, achieved by cooling and hydrogen chloride injection respectively. The reason for including such a step is economic. The solution obtained after hydrolysis is completed and the titanium hydrate removed essentially consists of iron chloride dissolved in hydrochloric acid. If this solution is passed through an acid regeneration plant the iron chloride is converted to iron oxide and hydrogen chloride. The free hydrochloric acid in the solution passes through the plant unchanged. It can be said that the acid regeneration plant merely exists to convert the metallic chlorides to their oxides with the coincident formation of hydrogen chloride for recovery and re-use.

It appears, therefore, that separation of iron chloride, from the liquor resulting after hydrolysis, and then feeding this to the regeneration plant is preferred. The acid solution may be recycled directly without passage through the regeneration plant. Crystallisation of ferrous chloride at this stage may be achieved by cooling or injection of hydrogen chloride.

These options are possible irrespective of whether or not some ferrous chloride has been removed prior to hydrolysis (it should be noted that only approximately half of the iron can be removed prior to hydrolysis anyway). However, if ferrous chloride crystals have been removed previously then they must be passed to acid regeneration for recovery of their associated acid values. In practice they will be combined with the acid regeneration plant feedstock depicted in Figures 2-4 according to the manner in which this feedstock is derived.

The iron content of the liquor may be reduced by cooling from 70°C, the temperature of the liquor after gangue separation, to a temperature below which ferrous chloride crystallizes from solution. For the preferred conditions given in the ilmenite digestion section, this latter temperature is between 35°C and 40°C.

The lower the final temperature to which the liquor is cooled so the amount of ferrous chloride that crystallizes from solution increases. The crystals can be removed from the liquor by, for example, centrifugation.

For operating convenience a temperature of 20-25°C is suggested. This will enable a reduction in the iron content of the liquor from about 80 g/l, the level found after digestion, to about 40 g/l after crystal removal.

The crystals of ferrous chloride removed from the liquor are processed in the acid regeneration plant to recover the associated acid values.

Hydrolysis

At this stage, the soluble titanium is converted to insoluble titanium hydrate. The iron and most other elements present in lesser amounts remain in solution.

The reaction may be represented by the following equation:

$$TiCl_4 + 4H_2O \qquad Ti(OH)_4 + 4\ HCl$$

although this is a gross simplication of the chemistry involved.

The hydrolysis operation, and the related seed preparation to be described next, can markedly affect the ultimate product quality. It is crucial that it be conducted in a manner conducive to the formation of a titanium hydrate that yields high quality pigment after further processing.

The method used in these laboratories involved continous addition of the titanium solution to the hydrolysing mixture. Initially the continuous liquor addition is made to a prepared suspension of seed nuclei which promote the hydrolysis reaction and further, apparently,

determine the form and particle size and shape of the ultimate product.

The addition of liquor to a specific quantity of seed nuclei extends over a period of two hours. The amount of seed nuclei used represents approximately 1.5% - 2.0% w/w of the titanium precipitated from solution during the course of the reaction.

Throughout the hydrolysis procedure, the seed suspension or the hydrolysing mixture is stirred and maintained at boiling.

It may be beneficial to extent the boiling period for a short time after liquor addition is complete to achieve the maximum precipitation of titanium.

The liquor addition rate may vary within the two hour addition period or the addition period itself may even be extended. For example it may be appropriate to add half the liquor within the first half-hour then the remaining liquor over the next one and a half hours. It may be preferable to add the liquor at a continuous fixed rate over a three hour period.

The extent to which these variations are permissible has not been defined. The crucial aspect, however, appears to be that a slow continuous liquor addition is made and that on no occasion is a sudden, rapid influx of liquor to the vessel allowed.

Seed Preparation

The role of seed nuclei in the hydrolysis reaction is to provide a site upon which the titanium hydrate can precipitate. The seed nuclei thus grow. The final size of the titanium hydrate particles is determined by the number of seed particles available and the total amount of titanium precipitated.

The form of the seed nuclei can affect the shape of the final titanium hydrate particle. The seed nuclei used in this work are conducive to the formation of an acicular crystalline form in the final product.

In this process seed nuclei are prepared by diluting a portion of the feed liquor sevenfold with water then boiling the resulting diluted liquor for fifteen minutes to precipitate the soluble titanium in the required form.

2% of the feed liquor stream has been found a suitable amount to achieve the desired result.

Although not proven it is probable that the liquor volume used for seed preparation is a function of the liquor composition and the volume of dilution water used. It is suspected, for example, that higher volumes of dilution water will allow the use of less liquor for seed preparation.

Further, it is quite probable that other methods for seed nuclei preparation, well known to the industry, would be effective. Precipitation of the nuclei by alkali addition rather than by thermal hydrolysis is well established.

The suspension of seed nuclei is used directly in the hydrolysis procedure as previously described.

## Filtration and Washing

The hydrolysed liquor consists of a precipitated titanium hydrate suspended in a liquor containing the other metallic chlorides in solution.

Conventional solids separation techniques, for example thickeners and filters, can be employed to recover the titanium hydrate. Extensive washing of the hydrate is necessary to remove the soluble components especially those that have an adverse effect on product whiteness and in particular the iron.

For washing, a 3% w/w aqueous solution of hydrochloric acid must be employed.

Synthetic flocculants may be beneficially used throughout this operation.

## Calcination

The washed titanium hydrate is now ready for calcination, which process involves heating the material to a temperature sufficient to produce titanium dioxide pigment but at a temperature less than that for particle sintering to occur when adverse effects on the product quality result.

The titanium hydrate will be available as a paste, containing approximately 50% w/w $TiO_2$, for feeding to the calciner. As is well known in the industry particular chemical additions can be made to the titanium hydrate prior to calcination to achieve beneficial effects. In this work potassium and zinc (added as the chloride salts) have allowed the attainment of good hiding power and colour in the final product. Both elements have been used at a level of 0.5% w/w (calculated as the normal oxides) with the treated hydrate being calcined at a temperature of 850-900°C in a laboratory muffle furnace.

Titanium dioxide pigments produced by this procedure are at least comparable to commercial pigment in terms of colour and hiding power.

It has the rutile structure.

Acid Regeneration

In the process method described, hydrochloric acid is used to dissolve most of the ilmenite. Sufficient acid is used to convert titanium, iron, and other soluble elements to their respective chloride salts and to leave an excess of free acid in the liquor.

The hydrolysis operation effectively releases the acid values associated with titanium tetrachloride while precipitating titanium hydrate. The other metallic chlorides remain as such in solution.

For the process to be viable, essentially all of the acid originally used for ilmenite digestion and also hydrate washing must be recovered and returned at the appropriate strength for re-use.

Commercial technology is well established for recovering hydrochloric acid from ferrous chloride solutions in, for example, the steel pickling industry. Such methods produce about 20% w/w hydrochloric acid. Techniques are known which allow production of 35% w/w acid, the acid strength used for ilmenite digestion.

In essence these technologies involve roasting the ferrous chloride solution at about 700°C to form hydrogen chloride and ferric oxide.

The following equation depicts the reaction involved

$$2\ FeCl_2 + O + 2H_2O \qquad Fe_2O_3 + 4HCl$$

Most other metallic chlorides pertinent to the titanium dioxide process react in a similar manner. The hydrogen chloride gas leaving the reactor can be absorbed in water to yield 20% w/w hydrochloride acid.

Addition of a chloride salt, such as magnesium chloride, to this acid will allow a concentrated hydrogen chloride gas stream to be produced by heating. Absorbtion of this gas stream in fresh 20% w/w hydrochloric acid increases the acid concentration to 35% w/w.

In the pigment process, the main process streams from which hydrochloric acid must be recovered are the strong filtrates from titanium hydrate filtration, the dilute wash waters, and ferrous chloride crystals if the crystallization option before hydrolysis is chosen.

The strong filtrates contain considerable iron and other chlorides as well as containing up to 20% free hydrochloric acid derived from the excess used at ilmenite digestion and also that released by hydrolysis of the titanium.

The wash filtrates will contain some iron chloride and about 3% w/w hydrochloric acid while the ferrous chloride crystals are reasonably pure.

These streams may be combined and passed, in total, through an acid regeneration plant to recover the acid values. This scheme is labelled shown in Figure 2. It has the advantages of simplicity and of being reasonably proven but also the major disadvantage of highest cost. The free acid present in the streams is passed through the regeneration plant without significant change.

The scheme shown in Figure 3 provides a means of recycling most of the free acid without its passing through the regeneration plant. In this option ferrous chloride is crystallized from the strong filtrates and, after separation from the mother liquor, is passed to the regeneration plant with other feed streams. The disadvantages of this option are that a temperature considerably below 0°C is necessary to remove most of the iron as ferrous chloride and that minor elemental chlorides may not crystallize until they reach significant concentrations in the recycle loop.

The preferred option at this time, the scheme in Figure 4, involves saturation of the strong filtrates with hydrogen chloride gas from the extractive distillation unit. The solubility of ferrous and most other chlorides is considerably reduced and they will crystallize

at moderate temperatures, say 20°C, while leaving only low concentrations in the mother liquor. The crystals so formed pass to the acid regeneration plant while the mother liquor, now containing 35% w/w hydrochloric acid is returned to digestion.

Example 1

Ilmenite sand containing 44.8% $TiO_2$, 41.9% FeO (total iron reported as FeO) and 0.24% $P_2O_5$ was ground in a laboratory mill to a fine powder, 95% less than 74$\mu$ size.

560g of the ground ilmenite was added to 2 litres of 33% w/w hydrochloric acid, previously heated to 50°C, contained in a stirred reaction vessel. The stirred mixture was further heated to reach a maximum temperature of 88°C fifteen minutes after the ilmenite addition. Heating was discontinued and the mixture temperature declined to 80°C after a further 45 minutes. The mixture temperature was allowed to decline slightly more than maintained at between 70-75°C until a total reaction time of four hours had elapsed. Ten grams of metallic iron powder was added to the mixture one hour after the reaction commenced.

Unreacted ilmenite and gangue solids were separated from the final reaction mixture by filtration using a laboratory Buchner funnel and glass fibre filter paper. Analysis of the liquor and residue showed that 89.4% of the titanium, 91.8% of the iron and 100% of the phosphorus had been dissolved from the ilmenite.

2.1 litres of the clean liquor were obtained, containing 100 g/l $TiO_2$, 65g/l Fe and 0.68 g/l $P_2O_5$.

Two litres of liquor were thermally hydrolysed. This was accomplished by first boiling 40mls of the liquor, diluted with 280ml of water, for 15 minutes to prepare a suspension of seed nucleii. The remaining liquor was added to the seed nucleii at a constant rate of 1.2 l/h with the hydrolysed mixture being boiled for a further twenty minutes at the end of liquor addition. 94% of the titanium dissolved in the feed

liquor was converted to insoluble titanium hydrate. All of the phosphate precipitated with the titanium.

The hydrolysate mixture was filtered using a Buchner funnel and glass fibre paper to yield a cake of titanium hydrate and 2.08 l of filtrate containing 63 g/l Fe and 5.5g g/l $TiO_2$.

After extensive washing of the hydrate cake, using 3% w/w hydrochloric acid as the wash fluid, a number of samples were variously calcined. Calcined products were assessed for tinting strength, using a modified version of the ASTM D332-80 procedure, and colour using a tristimulus colour measuring instrument with measurements reported as the L value, brightness, and b value, yellow/blue undertone. Rutile content was also determined as was the iron and phosphate content.

Typical results, given in the attached table, show that potash, at the level of 0.5% w/w addition, has marked beneficial effects on the rutile content and tinting strength for products calcined at 800°C and the further addition of 0.5% w/w zinc oxide further improves tinting strength and rutile content and also markedly improves the brightness while decreasing the yellow undertone.

The products contained 0.67% $P_2O_5$.

EXAMPLE 2

The same ilmenite sand as used in Example 1 was vigorously agitated in a hydrochloric acid solution containing 25 g/l HCl. 300ml of the acid solution per 600g of ilmenite were used, with agitation continuing for 15 minutes and the acid at ambient temperature. The ilmenite was recovered by filtration, residual leach solution being removed by washing with water, and dried at 105°C. The ilmenite now contained 0.06% $P_2O_5$ compared to 0.24% prior to treatment. The titanium content was analysed as 45.2% $TiO_2$ and the iron content at 42.7%.

After grinding the ilmenite to 95% less than 75$\mu$, it was reacted with hydrochloric acid in a similar manner to that described in Example 1.

On this occasion, 86% of the original titanium and 89.3% of the original iron contained in the ilmenite was dissolved into the acid. All of the phosphate in the ilmenite dissolved.

2.13 litres of clean liquor containing 94g/l $TiO_2$, 78g/l Fe, and 0.14 g/l $P_2O_5$ were obtained.

Two litres of this liquor were cooled, while being agitated, to 3°C. Crystal formation commenced at 39°C and was significant when 3°C was attained. The crystals were collected by filtration through a coarse cloth, with adhering liquor being removed by washing with 100ml of water at 0°C. 1.865 litres of mother liquor containing 98 g/l $TiO_2$, 38 g/l Fe, and 0.14 g/l $P_2O_5$ resulted. The crystals, weighing 316g, had an iron content corresponding to $FeCl_2$ 4 $H_2O$.

1.75 l of the mother liquor were thermally hydrolysed. 35 ml of the liquor and 263 ml of water were used to prepare the seed suspension, as described in Example 1, and the remaining liquor was added at a constant flow rate to the hydrolysing mixture. The addition was completed in two hours.

Following filtration, 411g of hydrate cake and 1.87 l of filtrates were obtained, the latter containing 7 g/l $TiO_2$, 33.6 g/l Fe, and no phosphate. 93% of the original titanium had precipitated.

After thoroughly washing the hydrate with 3% w/w hydrochloric acid, samples were prepared for calcination as previously. Product assessment was as given in Example 1, and the results are included in the attached table.

A considerable reduction in iron content of the product, 30 ppm compared to 90 ppm for Example 1 is evident. This is attributed to the removal of considerable iron from the liquor prior to hydrolysis being accomplished. An improvement in b value, the yellow undertone, is also evident from the results when zinc is present.

Further inspection of the results shows similar trends to those described earlier.

The phosphate content of the product was 0.12% w/w.

EXAMPLE 3

The ground ilmenite prepared for Example 1 was vigorously agitated in 25 g/l HCl solution. Ilmenite was recovered by filtration, washed with water, and dried. It contained no phosphate after this treatment.

Titanium hydrate was prepared in a similar manner to that described in Example 1 with similar process parameters applying.

Calcination of washed hydrate samples showed tinting strengths of the products to be similar to those previously obtained. Colour was also comparable but the rutile content for samples calcined at 800°C was significantly higher than previously.

TABLE

| Calcination Temperature | | 800 | 700 | 800 | 900 | 700 | 800 |
|---|---|---|---|---|---|---|---|
| % $K_2O$ w/w | | 0 | 0.5 | 0.5 | 0.5 | 0.5 | 0.5 |
| % ZnO w/w | | 0 | 0 | 0 | 0 | 0.5 | 0.5 |
| % $P_2O_5$ | Property | | | | | | |
| 0.67% | TS | 580 | 560 | 690 | 720 | 600 | 740 |
| | ΔL | 0.26 | 0.81 | 0.31 | -0.95 | 0.61 | 0.96 |
| | Δb | 1.06 | 1.35 | 1.16 | 1.17 | 0.69 | 0.41 |
| | ppm Fe | 90 | 90 | 90 | 90 | 90 | 90 |
| | % Rutile | 73 | 81 | 88 | 100 | 84 | 94 |
| 0.12% | TS | 600 | 560 | 690 | 750 | 580 | 720 |
| | ΔL | -0.90 | 0.10 | -0.53 | -2.4 | 0.12 | 0.97 |
| | Δb | 1.23 | 1.52 | 1.17 | 1.49 | 0.73 | 0.28 |
| | ppm Fe | 30 | 30 | 30 | 30 | 30 | 30 |
| | % Rutile | 89 | 71 | 94 | 100 | 80 | 93 |
| 0% | TS | 580 | 560 | 600 | 700 | 610 | 700 |
| | ΔL | -0.20 | 0.42 | -0.44 | -2.27 | 0.76 | 1.08 |
| | Δb | 1.33 | 1.69 | 1.53 | 1.54 | 0.60 | 0.36 |
| | ppm Fe | 70 | 70 | 70 | 70 | 70 | 70 |
| | % Rutile | 81 | 72 | 96 | 100 | 84 | 99 |

L is the difference between a commercial pigment and the experimental sample. A positive value signifies better brightness.
b is the difference between a commercial pigment and the experimental sample. A positive value signifies an increased yellow undertone.
TS is the tinting strength. On the scale used commercial pigment would have a value of about 750.

The preferred option at this time, the scheme in Figure 4, involves saturation of hte strong filtreates withhydrogen chloride gas from the extracive distillation unit. The solubility of ferrous and most other chlorides is considerably reduced and they will crystallize at moderate temperatures, say 20°C, while leaving only low concentrations in the mother liquor. The crystals so formed pass to the acid regeneration plant while the mother liquor, now containing 35% w/w hydrochloric acid is returned to digestion.

CLAIMS

1. A process for producing titanium dioxide of a pigment grade from ilmenite comprising the steps to effect at least a substantial removal of the phosphorous

(1) reacting in solution at an elevated temperature the ilmenite when in a particulate form with an excess of hydrochloric acid at an acid concentration greater than 25% w/w to generate titanium ions in solution,

(2) removing solids from the resulting liquor,

(3) optionally precipitating ferrous chloride from the liquor,

(4) hydrolysing the titanium ions in the presence of seed nuclei and precipitating titanium hydrate from the liquor,

(5) separating the resulting solution from the precipitated titanium hydrate,

(6) optionally regenerating hydrochloric acid at a strength greater than 25% w/w from the resulting solution of step 5, optionally using ferrous chloride from optional step 3, and returning such acid for use in step 1, and

(7) calcinating titanium hydrate obtained from step 5, optionally in the presence of additives, to produce titanium dioxide of a pigment grade.

2. A process as claimed in claim 1 wherein the ilmenite before going to step 1 has been preleached with a dilute mineral acid to remove some of the phosphorous content thereof if the ilmenite feedstock a phosphorous content that requires reduction.

3. A process as claimed in claim 1 or claim 2 wherein step 6 is performed.

4. A method as claimed in claim 3 wherein step 3 is performed and step 6 uses the ferrous chloride therefrom.

5. A process as claimed in any one of the preceding claims wherein hydrolysis step 4 involves the substantially continuous addition of the liquor containing titanium ions to a hydrolising mixture including suspended seed nuclei.

6. A process for producing titanium dioxide of a picment grade from ilmenite having a phosphorous content comprising the steps of

(A) leaching the ilmenite with dilute hydrochloric acid to effect at least a substantial removal of the phosphorus content therefrom, and

(B)(1) reacting in solution at an elevated temperature the resulting ilmenite when in a particulate form with an excess of hydrochloric acid at an acid concentration greater than 25% w/w to generate titanium ions in solution,

(2) removing solids from the resulting liquor,

(3) optionally precipitating ferrous chloride from the liquor,

(4) hydrolysing the titanium ions in the presence of seed nuclei and precipitating titanium hydrate from the liquor,

(5) separating the resulting solution from the precipitated titanium hydrate,

(6) optionally regenerating hydrochloric acid at a strength greater than 25% w/w from the resulting solution of step 5, optionally using ferrous chloride from optional step 3, and returning such acid for use in step 1, and

(7) calcining titanium hydrate obtained from step 5, optionally in the presence of additives, to produce titanium dioxide of a pigment grade.

7. A process as claimed in claim 6 wherein the hydrolysis step 4 involves the substantially continous addition of the liquor containing

continuous ions to a hydrolising mixture including suspended seed nuclei.

8. A process as claimed in claim 7 wherein said substantially continuous addition takes about two hours.

9. A process as claimed in claim 7 or claim 8 wherein the seed nuclei represent 1.5% to 2.0 w/w of the titanium precipitated during the course of the reaction.

10. A process as claimed in claim 6 wherein a quantity of ions sufficient to convert most, if not all, of the ferric ion content to a ferrous state is added to the reaction mix of step 1 or the liquor thereof.

11. A process as claimed in claim 6 wherein the acid strength for step 1 is greater than 30% w/w.

12. A process as claimed in claim 6 wherein the acid strength for step 1 is 35% w/w.

13. A process as claimed in claim 6 wherein the particulate ilmenite has been ground and the ilmenite size is such that 95% of the particles are below 74 microns.

14. A process as claimed in claim 6 wherein the excess of acid to ilmenite is such that there is an acid/ilmenite ratio of about 1.5 to 1 when expressed as the weight ratio of 100% acid to ilmenite.

15. A process as claimed in claim 6 wherein the elevated temperature is 95°C maximum.

16. A process as claimed in claim 6 wherein the action of the ilmenite with hydrochloric acid is at 95° maximum reducing to 80°C within the first hour, then declining to 70°C over the next three hours.

17. A process as claimed in claim 6 wherein the action time for step 1 is about 4 hours.

18. A process as claimed in claim 6 wherein optional step 3 is carried out and ferrous chloride produced thereby is used in the regeneration of at least some of the acid to be returned for use in step 1.

19. A process as claimed in claim 6 wherein step 4 involves thermal hydrolysis to convert the soluble titanic ions to insoluble titanium hydrate.

20. A process for preparing ilmenite with a phosphorous content for titanium dioxide pigment recovery comprising leaching the ilmenite with dilute mineral acid at low or ambient temperatures prior to digestion of the titanium values.

21. A process as claimed in claim 20 wherein the mineral acid is hydrochloric acid.

22. A process as claimed in claim 21 wherein the hydrochloric acid is at a concentration of from 10 to 50 g/l.

23. A process as claimed in claim 22 wherein the hydrochloric acid is substantially at ambient temperature.

0186370

1/2

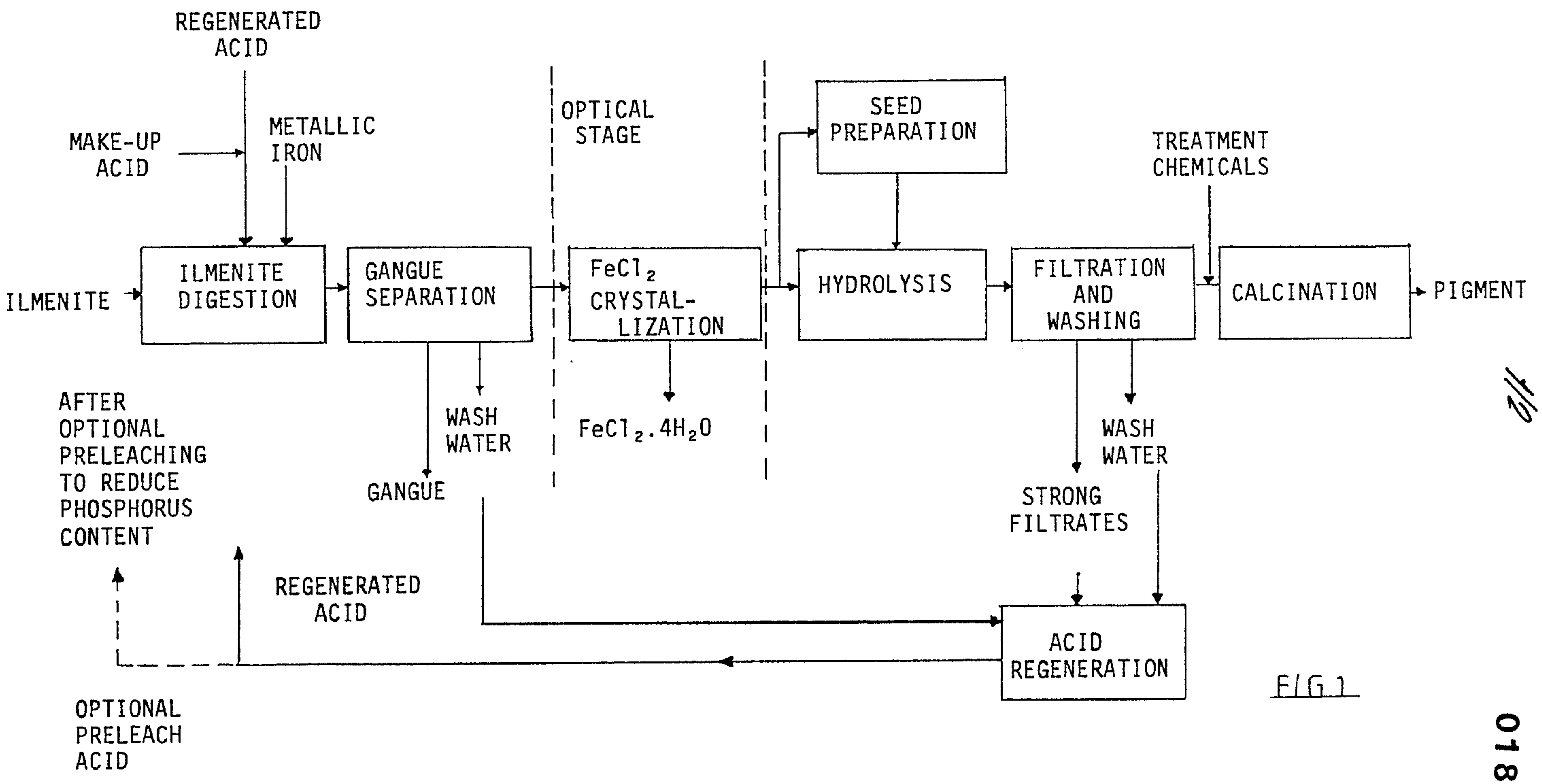


FIG 1

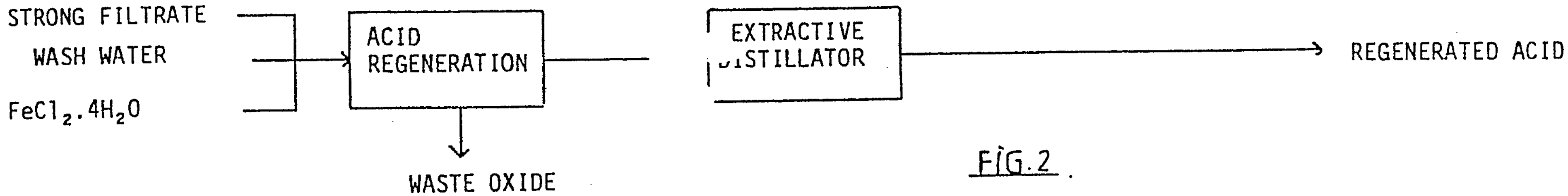


FIG. 2

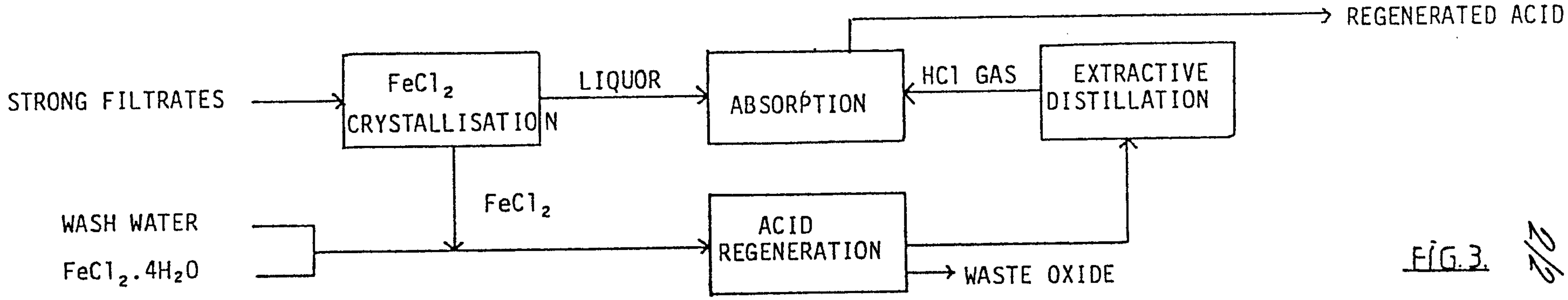


FIG. 3

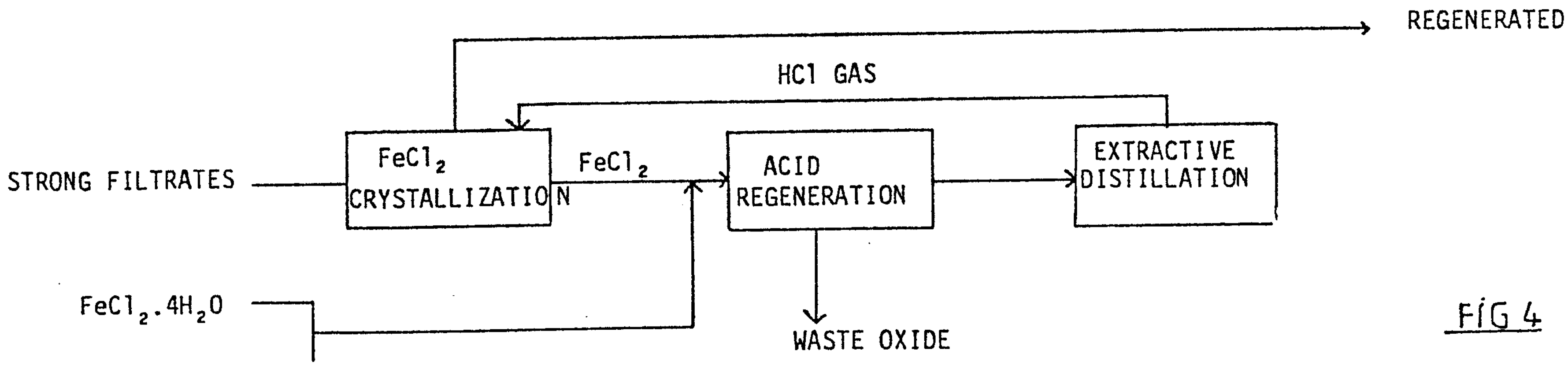


FIG 4